# FASCICULE DE BREVET EUROPEEN

(11) **EP 2 507 466 B1**
(45) Date de publication et mention de la délivrance du brevet: **30.07.2014**
(21) Numéro de dépôt: 10807450.1
(22) Date de dépôt: 30.11.2010
(51) Int. Cl.: E21B 17/01

(54) **ENSEMBLE DE RACCORDEMENT D'UNE CONDUITE TUBULAIRE FLEXIBLE À UNE INSTALLATION SOUS-MARINE**
ANORDNUNG FÜR DEN ANSCHLUSS EINER FLEXIBLEN ROHRFÖRMIGEN LEITUNG AN EINE UNTERWASSERANLAGE
ASSEMBLY FOR CONNECTING A FLEXIBLE TUBULAR LINE TO AN UNDERWATER INSTALLATION

(30) Priorité: 04.12.2009 FR 0958664
(43) Date de publication de la demande: 10.10.2012
(73) Titulaire: Technip France, 92400 Courbevoie (FR); Advanced Production and Loading AS, 4816 Kolbjørnsvik (NO)
(72) Inventeur: HOVDE, Geir Olav, N-4817 His (NO)
(74) Mandataire: Bertrand, Didier
(86) Numéro de dépôt international: PCT/FR2010/052569
(87) Numéro de publication internationale: WO 2011/067529

(56) Documents cités:
- WO-A2-99/66169
- US-A- 4 310 263
- US-A1- 2004 026 081
- US-A1- 2004 244 984
- US-A1- 2005 196 243

## Description

La présente invention se rapporte à un ensemble de raccordement d'une conduite tubulaire flexible à une installation sous-marine pour transporter des hydrocarbures liquides et/ou gazeux, par exemple du gaz naturel liquéfié ou bien encore de l'eau.

L'extraction et le transport de ces fluides en milieu marin nécessite une installation sous-marine dans le fond marin et une installation de surface en surplomb, de manière à pouvoir récupérer les hydrocarbures par l'intermédiaire d'une conduite tubulaire flexible qui est étendue entre l'installation sous-marine et l'installation de surface.

Cette conduite flexible est avantageusement du type non lié (en anglais « unbonded ») et est décrite dans les documents normatifs publiés à l'American Petroleum Institute API 17 J et API RP 17B. Sans départir de l'invention, la conduite flexible pourrait être une conduite flexible de type liée, un ombilical de puissance ou de contrôle par exemple. Aussi, l'invention n'est pas limitée à une conduite flexible mais s'étend aussi à un groupement de conduites flexibles, « bundle » en langue anglaise. L'installation sous marine peut être par exemple une tête de puits ou une connexion de type FLET ou PLET.

L'installation de surface est soumise aux mouvements de houle, aux courants et au vent impliquant alors un déplacement de l'installation de surface à la fois dans le sens horizontal et dans le sens vertical. Ces mouvements de l'installation de surface ajoutés aux courants se transmettent à la conduite tubulaire flexible et se propagent le long de la conduite générant des mouvements et des déformations de la conduite tubulaire flexible. La conduite comporte une portion flottante entre la surface et le fond, et une portion de contact, cette dernière comportant une zone de contact de la conduite tubulaire flexible avec le fond marin (« touch down zone » ou « TDZ » en langue anglaise), la position de la zone de contact TDZ se déplaçant en fonction de ces mouvements, notamment de ceux de l'installation de surface. Au niveau de la zone de contact, la portion de contact présente une courbure et elle poursuit ensuite sa course le long du fond marin vers l'installation sous-marine. Les mouvements transmis à la conduite tubulaire flexible peuvent se propager jusqu'à la zone de contact ou TDZ et engendrer des déformations importantes de la conduite flexible telles que la torsion ou une flexion de la conduite pouvant aller jusqu'à une compression de la conduite flexible en pied voir un écrasement de celle-ci. Aussi, ces mouvements et déformations de la conduite exercent sur la conduite en contact avec le fonds marin des efforts importants, notamment au niveau de la zone de contact (TDZ) pouvant conduire à une détérioration de l'intégrité de la conduite flexible.

Pour limiter les efforts qui s'exercent sur la conduite au niveau de la zone de contact, différentes configurations de conduites flexibles existent pour découpler les mouvements de l'installation de surface de ceux de la conduite au niveau de la TDZ.

Dans les situations où la mer est peu profonde, ou de bas-fonds, typiquement où le niveau est inférieur à 100 mètres par rapport au fond marin, les configurations de conduite tubulaire flexible présentent généralement de grandes surlongueurs pour accommoder les mouvements transmis à la conduite flexible. Au gré des mouvements de l'installation de surface et des courants, la conduite flexible se déforme et se déplacent pour absorber ces efforts.

Une configuration typique pour les mers peu profonde est celle où la conduite tubulaire flexible qui présente deux extrémités opposées, l'une raccordée à l'installation sous-marine, l'autre raccordée à l'installation de surface est équipée entre les deux, de bouées sous-marines et de modules pesants formant lestes. Les bouées sous-marines permettent de former une portion flottante de conduite tubulaire flexible qui est maintenue ainsi entre le fond marin et la surface en décrivant deux courbures de concavité dirigée vers le fond, tandis que les modules pesants permettent, notamment au voisinage de l'installation sous-marine, de maintenir une portion de contact de la conduite tubulaire en contact avec le fond marin. Cette configuration est communément connue sous le terme de configuration en double vague ou « double wave configuration » en langue anglaise.

On pourra se référer notamment au document US 2006/0159 521 montrant une installation où la conduite tubulaire flexible est équipée de protection sous-marine au niveau des zones de contact avec le fond marin.

Le document WO 99/66169 montre une autre installation sous-marine.

Aussi, sous l'effet des mouvements de l'installation de surface et des courants, la portion flottante de conduite tubulaire flexible, retenue par l'extrémité de surface connectée à l'installation de surface, est entraînée en mouvement et se déforme pour accommoder ces mouvements et dissiper au moins partiellement les efforts transmis au niveau des zones de contact. Lorsque les conditions météorologiques se dégradent et que l'installation de surface est entraînée en mouvement par rapport à l'installation sous-marine avec de fortes amplitudes, typiquement de l'ordre de la hauteur de vague par exemple, et à des fréquences élevées, la conduite flexible, dans sa configuration dite en double vague, ne suffit plus à éviter les fortes sollicitations de la conduite au niveau de ses zones de contact avec le fond marin.

Par conséquent, un problème qui se pose et que vise à résoudre la présente invention est de fournir un ensemble de raccordement d'une conduite flexible à une installation sous-marine en mer peu profonde qui permette de préserver l'installation sous-marine lorsque les conditions météorologiques sont dégradées et que la mer est agitée.

Un autre problème que vise à résoudre l'invention est de fournir un ensemble de raccordement d'une conduite flexible à une installation sous-marine qui permette de préserver la conduite tubulaire flexible au niveau de la zone de contact en dissipant les efforts transmis au niveau de la zone de contact (TDZ).

Encore un autre but de l'invention est de contrôler les déplacements excessifs de la conduite lorsque la mer est agitée.

Dans le but de résoudre ce problème, la présente invention propose un ensemble de raccordement d'au moins une conduite flexible à une installation sous-marine posée sur le fond d'un milieu marin, ladite conduite flexible étant destinée à être étendue entre ladite installation sous-marine et une installation de surface émergée à la surface dudit milieu marin, ladite conduite flexible présentant d'une part une extrémité de surface opposée à une extrémité de fond, et d'autre part une portion de contact située près de ladite extrémité de fond et une portion flottante qui s'étend entre ladite portion de contact et ladite extrémité de surface, ladite extrémité de surface et ladite extrémité de fond étant respectivement destinées à être reliées à ladite installation de surface et à ladite installation sous-marine, tandis que ladite portion de contact vient en contact avec ledit fond au voisinage de ladite installation sous-marine et que ladite portion flottante s'étend entre ledit fond et ladite surface, ladite portion flottante étant susceptible d'exercer des efforts de traction sur ladite portion de contact. Selon l'invention, ladite portion de contact comprend une partie coudée, ladite partie coudée divisant ladite portion de contact en une première partie orientée vers ladite installation de fond et une seconde partie rejoignant ladite portion flottante ; et ladite partie coudée est amarrée sur ledit fond à un point d'ancrage opposé à la fois à ladite extrémité de fond et à ladite portion flottante de façon à maintenir lesdites première et seconde parties sensiblement parallèlement audit fond et de manière à reprendre lesdits efforts de traction exercés par ladite portion flottante sur ladite portion de contact.

Ainsi, une caractéristique de l'invention réside dans la mise en oeuvre de la portion de contact en formant une partie coudée, et dans l'amarrage de cette partie coudée dans un sens sensiblement opposé à la portion flottante de conduite, de manière à reprendre les efforts de traction exercés par cette portion flottante. De la sorte, l'installation sous-marine est beaucoup moins sollicitée puisque la première partie de portion de contact rejoignant l'installation sous-marine à laquelle elle est connectée par l'intermédiaire de l'extrémité de fond, est elle-même préservée des efforts de traction exercés par la portion flottante de conduite.

En outre, lorsque les efforts transmis par la portion flottante se propagent dans la portion de contact vers la zone de contact (TDZ), l'amplitude des mouvements de ladite zone de contact est atténuée puisque les efforts sont repris par l'amarrage. L'amarrage est avantageusement constitué d'une amarre flexible, par exemple une ligne d'ancrage dont une première extrémité est connectée à la partie coudée et dont la seconde extrémité est ancrée au fond marin, à distance de la partie coudée. L'amarre s'étend alors dans un plan sensiblement parallèle au fonds marin. De la sorte, les efforts de la portion flottante se transmettent à l'amarre par l'intermédiaire de la seconde partie de portion de contact et par la partie coudée. Les efforts qui impriment un mouvement vertical à la seconde partie de portion de contact se dissipent alors à travers l'amarre qui elle-même est entraînée en mouvement verticalement mais qui pivote autour de son point d'ancrage. On évite ainsi tout phénomène de déformation de la conduite dans la zone de contact (TDZ) tel que compression, écrasement, torsion ou encore flexion.

Ladite partie coudée présente un intrados opposé à un extrados et de manière avantageuse ladite partie coudée est amarrée du côté dudit extrados, tandis que les première et seconde parties de portion de contact sont orientées dans un sens opposé. En outre, ladite partie coudée est avantageusement rigide, de manière à obtenir une courbure constante au niveau de la partie coudée. Aussi, il est plus aisé d'amarrer la partie coudée à un point d'ancrage sur le fond marin, si elle est rigide.

Ladite partie coudée présente deux extrémités de liaison opposées l'une de l'autre, lesdites deux extrémités de liaison étant respectivement reliées auxdites première et seconde parties de ladite portion de contact, et avantageusement, chaque extrémité de liaison est équipée d'un fourreau raidisseur. Ce dernier permet de limiter le mouvement des première et seconde parties de portion de contact à proximité de la partie coudée et par conséquent de limiter leurs rayons de courbure et ainsi les préserver.

En outre, selon une caractéristique avantageuse, ladite portion de contact est équipée de modules pesants pour maintenir ladite portion de contact sur ledit fond. La nature du fond marin peut varier d'un milieu à un autre, il est parfois recouvert de vase, aussi, les modules pesants permettent de maintenir la portion de contact sensiblement parallèlement au plan moyen défini par le fond marin.

Selon un mode de mise en oeuvre de l'invention particulièrement avantageux, ladite partie coudée est amarrée audit point d'ancrage par une amarre orientée par rapport à ladite seconde partie de portion de contact et par rapport à ladite première partie de portion de contact selon des angles compris entre 90° et 180°. De préférence, l'angle formé par l'amarre et la seconde partie de portion de contact qui se prolonge par la portion flottante de conduite, est compris entre 120 et 150° tandis que l'angle formé par l'amarre et la première partie de portion de contact est compris entre 150 et 120°. De la sorte, l'amarre reprend en partie des efforts transmis par la portion de contact. Aussi, cette configuration permet de maintenir en tension selon une direction longitudinale cette première partie de portion de contact qui est flexible, et participe à contrôler des déplacements excessifs de la conduite par rapport à sa position nominale.

Selon une caractéristique particulièrement avantageuse, ladite partie coudée est amarrée audit point d'ancrage par une amarre extensible. Ainsi, l'amarre permet d'amortir et de dissiper les efforts de traction exercés par la portion flottante de conduite flexible sur la portion de contact, notamment lorsque la portion flottante imprime une forte accélération à la portion de contact. Préférentiellement, ladite amarre est réalisée dans un matériau comprenant des fibres de polymère. De la sorte, l'amarre est réalisée à un coût relativement avantageux. De plus, les fibres de polymère sont relativement résistantes au milieu marin, et il existe de nombreux matériaux présentant de larges gammes d'extensibilité.

Selon une variante de réalisation de l'invention particulièrement avantageuse, ladite amarre est reliée, entre ladite une partie coudée et ledit point d'ancrage, à une autre partie coudée d'une autre portion de contact d'une autre conduite flexible. Par conséquent, grâce à la mise en oeuvre d'une seule amarre, il est possible de maintenir une pluralité de parties coudées, et partant, de raccorder une pluralité de conduite flexible à l'installation sous-marine. Avantageusement, ladite autre portion de contact présente une autre première partie et une autre seconde partie respectivement sensiblement parallèles auxdites une partie et seconde partie. De la sorte, les portions de contact sont aisément maintenues parallèles entre elles sans risque d'entremêlement au niveau du fond marin.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en coupe verticale d'un ensemble de raccordement conforme à l'invention ;
- la Figure 2 est une vue schématique de dessus et de détail de l'ensemble de raccordement illustré sur la Figure 1, selon une première variante d'exécution ; et,
- la Figure 3 est une vue schématique de dessus et de détail de l'ensemble de raccordements illustrés sur la Figure 1, selon une seconde variante d'exécution ; et,
- la Figure 4 est une vue schématique de dessus et de détail de l'ensemble de raccordement selon un autre mode de réalisation.

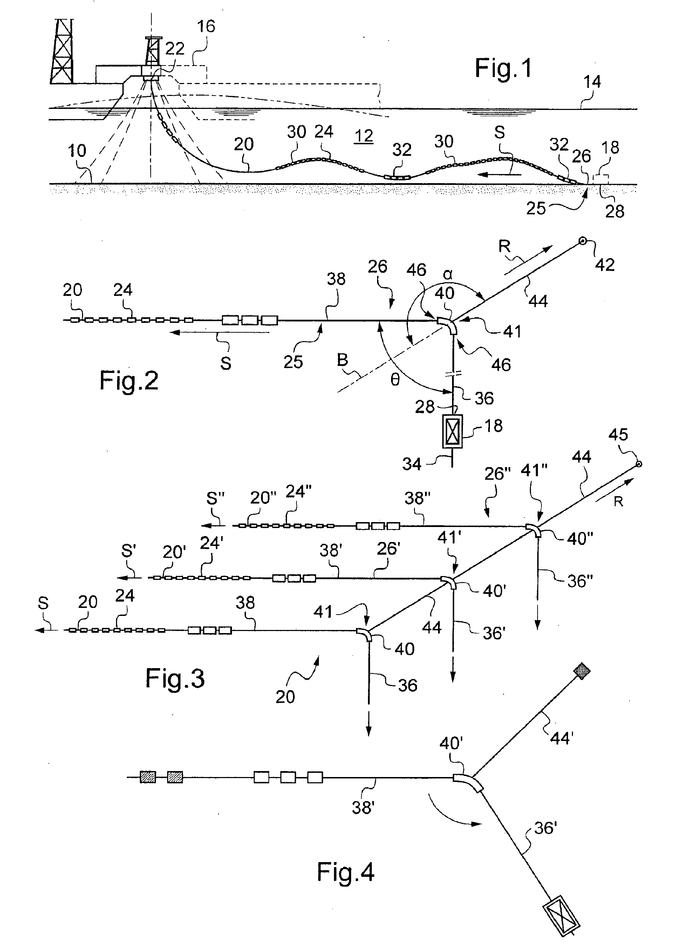

La Figure 1 montre un milieu marin avec un fond marin 10 une couche d'eau 12 et une surface marine 14. La couche d'eau est peu profonde inférieure à 100 mètres, par exemple inférieure à 50 mètres et préférentiellement comprise entre 30 et 45 mètres. En outre, une installation de surface 16 flotte sur la surface marine 14 et une installation sous-marine 18, représentée en traits interrompus, repose sur le fond marin 10. Entre les deux, est étendue une conduite tubulaire flexible 20. Cette dernière présente, de l'installation de surface 16 vers l'installation sous-marine 18, une extrémité de surface 22 raccordée à l'installation de surface 16, une portion flottante 24 qui s'étend entre le fond marin 10 et la surface marine 14, sensiblement parallèlement au fond marin, et une portion de contact 26 terminée par une extrémité de fond 28 que l'on détaillera ci-après en référence à la Figure 2. La portion de contact 26 présente une zone de contact 25, ou point de contact avec le fond marin 10. La portion flottante 24 est munie d'une succession de bouées sous-marines 30 en alternance avec des modules pesants 32, et qui confèrent des ondulations à la portion flottante 24.

Au moins un chapelet de bouées est nécessaire pour imposer une ondulation à la portion flottante et lui donner une surlongueur. Cependant, le nombre de ces concavités, leur orientation et la disposition des ensembles de bouées et de poids morts peuvent être variables et sont aisément déterminables par un homme du métier en fonction de différents paramètres comme les conditions de houle ou la configuration du champ.

Par ailleurs, les modules pesants 32 situés dans la portion de contact 26, lui permettent de venir en contact avec le fond marin 10 sensiblement parallèlement à ce dernier. A titre d'exemple, pour une houle centenaire, dénommée encore centennale, de hauteur significative supposée entre 10-15 m (périodicité 10-11 s) dans une couche d'eau comprise entre 43 et 45 mètres, la longueur de la portion flottante 24 pourra être comprise entre 100 et 170 mètres et la longueur de portion de contact 26 pourra être comprise entre 50 et 100 mètres.

On comprend ainsi que les mouvements de l'installation de surface 16, et des courants marins, non seulement selon une direction verticale due à la houle, mais aussi selon une direction horizontale se transmettent à la portion flottante et se propage tout le long de la conduite flexible 20, et ces efforts sont dissipés dans la portion de contact 26.

On se reportera à la Figure 2 pour décrire plus en détail l'ensemble de raccordement objet de l'invention, permettant précisément d'absorber ces efforts de traction afin qu'ils ne génèrent pas de déformations irréversibles de la zone de contact 25 par compression, écrasement, torsion ou flexion de celle-ci. On retrouve sur cette Figure 2 en vue de dessus, la portion de contact 26 de la conduite tubulaire flexible 20 terminée par son extrémité de fond 28 et l'installation sous-marine 18 auquelle elle est connectée. A titre d'exemple la portion de contact mesurera entre 50 et 100 m. L'installation sous-marine 18 représente ici une installation de réception d'un conduit rigide 34 provenant de la source pétrolière.

Ladite portion de contact 26, qui est un prolongement de la conduite tubulaire flexible 20 et par conséquent de même nature qu'elle, présente deux parties 36, 38 séparées par une partie coudée 40. Cette partie coudée 40 présente un extrados 41 et elle est reliée à un point d'ancrage 42 situé à distance, par l'intermédiaire d'une amarre 44, du côté de son extrados 41. L'amarre s'étend alors sensiblement dans un plan parallèle au fonds sous marin. Selon un premier mode de mise en oeuvre, la partie coudée 40 de la portion de contact 26 est formée par une manche de vertèbres articulées permettant de limiter la courbure de la portion de contact 26 qui la traverse à un rayon de courbure minimal. Cependant, il pourrait être envisagé de prévoir une manche rigide formée par un tuyau en acier coudé, lequel aurait un diamètre interne sensiblement égale au diamètre externe de la conduite flexible 20.

Selon un autre mode de mise en oeuvre préféré, la partie coudée 40 est constituée d'un coude rigide en acier 40, tandis que la portion de contact 26 est divisée en deux demi-portions respectivement raccordées aux deux extrémités opposées du coude rigide. Selon cet autre mode de mise en oeuvre, les deux extrémités opposées du coude rigide sont respectivement équipées d'un fourreau raidisseur 46, ou *«bending stiffener »* en langue anglaise, qui assure la transition en raideur entre le coude rigide en acier 40 et les portions de conduite flexible de contact. Il est aussi envisageable de remplacer le fourreau raidisseur par un tube de type « bell mouth ».

Dans le plan moyen constitué par les deux parties 36, 38 de portion de contact 26, et réunies par la partie coudée 40, ces deux partis 36, 38 sont écartées d'un angle θ inférieur 180 ° (et supérieur au rayon de courbure minimal de la conduite flexible si la portion coudée est constituée par une conduite flexible de type non liée). Préférentiellement, l'angle θ est compris entre 90° et 120°.

Le point d'ancrage 42 est situé à distance de la partie coudée 40 dans un sens opposé à la portion flottante 24 de la conduite flexible 20 et aussi dans un sens opposé à l'extrémité de fond 28. L'amarre 44 s'étend alors à l'écart de la portion coudée en définissant un angle ouvert α avec la seconde partie 38 de portion de contact 26, compris par exemple entre 90 et 170°C.

Sur la figure 2, la portion coudée présente un angle θ de 90° et l'amarre s'étend sensiblement selon une direction confondue avec la bissectrice B formée par les deux parties 36, 38 de portion de contact 26, soit en formant un angle α de 135°. La figure 4 illustre un autre exemple de mise en oeuvre de l'invention, où les éléments équivalents apparaissant sur la figure 2 portent la même référence affectée d'un signe prime : « ' ». Ainsi, la partie coudée 40' forme ici un angle supérieur à 90° soit 120° et où l'amarre 44' n'est pas confondue avec la bissectrice mais forme un angle α de 100°.

De façon judicieuse cependant, l'amarre 44' s'étend selon la direction confondue avec la bissectrice formée par les deux parties de portion de contact 36' et 38'. Ceci permet de stabiliser les déplacements latéraux de la partie coudée 40 lors des mouvements dynamiques de la conduite flexible 20.

La figure 2 présente un mode de réalisation particulier où la portion de contact 26 présente deux parties 38, 36 de sorte que la zone de contact 25 de la conduite flottante 24 avec le fond marin 10 (TDZ) et la partie coudée 40 sont distantes et reliées par la partie 38 de la portion de contact 26. Celle-ci présente alors plusieurs dizaines de mètres. Ce mode de réalisation est particulièrement avantageux, car la partie 38 de la portion de contact 26 contribue à accommoder les déformations de la conduite en se soulevant ce qui tend à déplacer la zone de contact 25. Cependant, il n'est pas exclu de prévoir une longueur de partie 38 très faible, par exemple de l'ordre du mètre, de sorte que la portion coudée soit sensiblement confondue avec la zone de contact (TDZ).

Ces deux parties 36, 38 de portion de contact 26 présentent une première partie 36 orientée vers l'installation de fond 18 et une seconde partie 38 orientée vers la portion flottante 24 qu'elle prolonge. En période de mer agitée, les mouvements de l'installation de surface ajoutés aux courants provoquent des déplacements et des déformations de la conduite flexible flottante 20 qui sont transmis le long de la portion de contact 26 et se dissipent essentiellement dans l'ensemble constitué par l'amarre 44 et la partie coudée 40.

L'amarre 44 reprend une partie essentielle R de ces efforts transmis à la conduite, par l'intermédiaire de la partie coudée 40, une partie essentielle R de ces efforts de traction.

L'amarre 44 est ici portée dans une position de tension de manière à étirer la portion flottante 24 de conduite tubulaire flexible 20 qui forme des ondulations, et de manière également à porter la première partie 36 de portion de contact 26 en tension pour lui imprimer une forme longitudinale. Cet arrangement déformable et souple constitué par l'amarre 44 et la partie coudée 40 permet de dissiper les efforts transmis dans la conduite flexible et de préserver la zone de contact 25 (« TDZ » en langue anglaise). Notamment, les risques de compression de la conduite en pied de conduite sont évités.

Au surplus, l'amarre 44 est réalisée dans un matériau extensible, du type en fibres de polymère tressées, par exemple en polyester. Ainsi, l'amarre 44 est aussi élastiquement déformable. De la sorte, lorsque les efforts de traction qui s'exercent sur la seconde partie 38 par l'intermédiaire de la portion flottante 24, varient en intensité, l'amarre 44 se déforme en conséquence et amortit sensiblement ces efforts de traction.

On se reportera à présent sur la Figure 3 illustrant une autre variante de réalisation de l'invention, où l'ensemble de raccordement permet de raccorder trois conduites flexibles. Les trois éléments identiques porteront une référence identique affectée respectivement du signe prime « ' » et double prime « " ». Ainsi, on retrouve sur cette Figure 3, l'amarre 44 reliée à son point d'ancrage 42 et la conduite flexible 20. On retrouve également la portion de contact 26 avec ses deux parties 36, 38 orientées perpendiculairement l'une par rapport à l'autre, et la partie coudée 40 reliée à l'amarre 44. Au surplus, l'amarre 44 est reliée à deux nouvelles conduites flexibles, une deuxième 20' et une troisième 20". Ces deux nouvelles conduites flexibles 20', 20" présentent respectivement, une deuxième 24' et une troisième 24" portions flottantes sensiblement parallèles entre elles et aussi à la portion flottante 24 de la conduite 20. Elles se prolongent respectivement par une deuxième portion de contact 26' et une troisième portion de contact 26", divisées respectivement en une deuxième première partie 36', et une deuxième seconde partie 38', et en une troisième première partie 36", et une troisième seconde partie 38". Les deuxième et troisième premières parties 36', 36" et les deuxième et troisième secondes parties 38', 38" sont respectivement sensiblement parallèles entre elles. En outre, les deuxièmes première 36' et seconde 38' parties d'une part et les troisièmes première 36" et seconde 38" parties d'autre part sont respectivement séparées par une deuxième partie coudée 40' et une troisième partie coudée 40". En outre, les deuxième 40' et troisième 40" parties coudées sont respectivement reliées à l'amarre 44 et sont espacées d'une distance équivalente à la distance séparant la partie coudée 40 de la deuxième partie coudée 40'.

Les trois premières parties 36, 36', 36" sensiblement parallèles entre elles sont aptes à être reliées à une installation de réception non représentée. L'amarre 44 est ainsi destinée à reprendre l'ensemble des efforts de tension exercée par les trois portions flottantes 24, 24', 24".

## Revendications

1. Ensemble de raccordement d'au moins une conduite flexible (20) à une installation sous-marine (18) posée sur le fond (10) d'un milieu marin, ladite conduite flexible étant destinée à être étendue entre ladite installation sous-marine (18) et une installation de surface (16) émergée à la surface dudit milieu marin, ladite conduite flexible (20) présentant d'une part une extrémité de surface (22) opposée à une extrémité de fond (28), et d'autre part une portion de contact (26) située près de ladite extrémité de fond et une portion flottante (24) qui s'étend entre ladite portion de contact (26) et ladite extrémité de surface (22), ladite extrémité de surface et ladite extrémité de fond (28) étant respectivement destinées à être reliées à ladite installation de surface (16) et à ladite installation sous-marine (18), tandis que ladite portion de contact (26) vient en contact avec ledit fond (10) au voisinage de ladite installation sous-marine (18) et que ladite portion flottante (24) s'étend entre ledit fond et ladite surface, ladite portion flottante (24) étant susceptible d'exercer des efforts de traction sur ladite portion de contact (26) ;
**caractérisé en ce que** ladite portion de contact (26) comprend une partie coudée (40), ladite partie coudée divisant ladite portion de contact (26) en une première partie (36) orientée vers ladite installation de fond (18) et une seconde partie (38) rejoignant ladite portion flottante (24) ;
et **en ce que** ladite partie coudée (40) est amarrée sur ledit fond (10) à un point d'ancrage (42) opposé à la fois à ladite extrémité de fond (28) et à ladite portion flottante (24) de façon à maintenir lesdites première et seconde parties (36, 38) sensiblement parallèlement audit fond et de manière à reprendre lesdits efforts de traction exercés par ladite portion flottante (24) sur ladite portion de contact (26).

2. Ensemble de raccordement selon la revendication 1, **caractérisé en ce que** ladite partie coudée (40) présente un intrados opposé à un extrados (41) et **en ce que** ladite partie coudée est amarrée du côté dudit extrados (41).

3. Ensemble de raccordement selon la revendication 1 ou 2, **caractérisé en ce que** ladite partie coudée (41) est rigide.

4. Ensemble de raccordement selon l'une quelconque des revendications 1 à 3, **caractérisé en ce que** ladite partie coudée (41) présente deux extrémités de liaison opposées l'une de l'autre, lesdites deux extrémités de liaison étant respectivement reliées auxdites première et seconde parties (36, 38) de ladite portion de contact (26), et **en ce que** chaque extrémité de liaison est équipée d'un fourreau raidisseur (46).

5. Ensemble de raccordement selon l'une quelconque des revendications 1 à 4, **caractérisé en ce que** ladite portion de contact (26) est équipée de modules pesants (32) pour maintenir ladite portion de contact (26) sur ledit fond (10).

6. Ensemble de raccordement selon l'une quelconque des revendications 1 à 5, **caractérisé en ce que** ladite partie coudée (40) est amarrée audit point d'ancrage (42) par une amarre (44) orientée par rapport à ladite seconde partie (38) de portion de contact (26) et par rapport à ladite première partie (36) de portion de contact selon des angles compris entre 90° et 180°.

7. Ensemble de raccordement selon la revendication 6, **caractérisé en ce que** ladite partie coudée (40) est amarrée audit point d'ancrage (42) par une amarre (44) extensible.

8. Ensemble de raccordement selon la revendication 6 ou 7, **caractérisé en ce que** ladite amarre (44) est réalisée dans un matériau comprenant des fibres polymère.

9. Ensemble de raccordement selon l'une quelconque des revendications 6 à 8, **caractérisé en ce que** ladite amarre (44) est reliée, entre ladite une partie coudée (40) et ledit point d'ancrage (42), à une autre partie coudée (40' ; 40") d'une autre portion de contact (26' ; 26") d'une autre conduite flexible (20' ; 20").

10. Ensemble de raccordement selon la revendication 9, **caractérisé en ce que** ladite autre portion de contact (26' ; 26") présente une autre première partie (36' ;36") et une autre seconde partie (38',38") respectivement sensiblement parallèles auxdites une partie et seconde partie (36, 38).

## Patentansprüche

1. Anordnung für den Anschluss mindestens einer flexiblen Rohrleitung (20) an eine Unterwasseranlage (18), die auf dem Boden (10) einer Meeresumgebung steht, wobei die flexible Rohrleitung dafür bestimmt ist, zwischen der Unterwasseranlage (18) und einer Oberflächenanlage (16), die an der Oberfläche der Meeresumgebung heraustritt, gespannt zu werden, wobei die flexible Rohrleitung (20) einerseits ein Oberflächenende (22) aufweist, das einem Bodenende (28) gegenüberliegt, und andererseits einen Kontaktabschnitt (26), der nahe des Bodenendes befindlich ist, und einen schwimmenden Abschnitt (24), der sich zwischen dem Kontaktabschnitt (26) und dem Oberflächenende (22) erstreckt, aufweist, wobei das Oberflächenende und das Bodenende (28) dafür bestimmt sind, mit der Oberflächenanlage (16) bzw. der Unterwasseranlage (18) verbunden zu werden, während der Kontaktabschnitt (26) mit dem Boden (10) in der Nähe der Unterwasseranlage (18) in Kontakt kommt, und während der schwimmende Abschnitt (24) sich zwischen dem Boden und der Oberfläche erstreckt, wobei der schwimmende Abschnitt (24) imstande ist, Zugkräfte auf den Kontaktabschnitt (26) auszuüben;
**dadurch gekennzeichnet, dass** der Kontaktabschnitt (26) einen abgebogenen Teil (40) umfasst, wobei der abgebogene Teil den Kontaktabschnitt (26) in einen ersten Teil (36), der zu der Bodenanlage (18) hin orientiert ist, und einen zweiten Teil (38), der in den schwimmenden Abschnitt (24) übergeht, unterteilt,
und dass der abgebogene Teil (40) auf dem Boden (10) in einem Verankerungspunkt (42) vertäut ist, der gleichzeitig dem Bodenende (28) und dem schwimmenden Abschnitt (24) gegenüberliegt, derart, dass der erste und der zweite Teil (36, 38) zu dem Boden im Wesentlichen parallel gehalten werden, und derart, dass er die Zugkräfte, die durch den schwimmenden Abschnitt (24) auf den Kontaktabschnitt (26) ausgeübt werden, aufnimmt.

2. Anschlussanordnung nach Anspruch 1, **dadurch gekennzeichnet, dass** der abgebogene Teil (40) eine Innenseite aufweist, die einer Außenseite (41) gegenüberliegt, und dass der abgebogene Teil auf der Seite der Außenseite (41) vertäut ist.

3. Anschlussanordnung nach Anspruch 1 oder 2, **dadurch gekennzeichnet, dass** der abgebogene Teil (41) steif ist.

4. Anschlussanordnung nach einem der Ansprüche 1 bis 3, **dadurch gekennzeichnet, dass** der abgebogene Teil (41) zwei Verbindungsenden aufweist, die einander gegenüberliegen, wobei die zwei Verbindungsenden mit dem ersten bzw. zweiten Teil (36, 38) des Kontaktabschnitts (26) verbunden sind, und dass jedes Verbindungsende mit einer Versteifungsmanschette (46) versehen ist.

5. Anschlussanordnung nach einem der Ansprüche 1 bis 4, **dadurch gekennzeichnet, dass** der Kontaktabschnitt (26) mit Schwermodulen (32) versehen ist, um den Kontaktabschnitt (26) auf dem Boden (10) zu halten.

6. Anschlussanordnung nach einem der Ansprüche 1 bis 5, **dadurch gekennzeichnet, dass** der abgebogene Teil (40) in dem Verankerungspunkt (42) durch ein Tau (44) vertäut ist, das relativ zu dem zweiten Teil (38) des Kontaktabschnitts (26) und relativ zu dem ersten Teil (36) des Kontaktabschnitts in Winkeln zwischen 90° und 180° orientiert ist.

7. Anschlussanordnung nach Anspruch 6, **dadurch gekennzeichnet, dass** der abgebogene Teil (40) in dem Verankerungspunkt (42) durch ein dehnbares Tau (44) vertäut ist.

8. Anschlussanordnung nach Anspruch 6 oder 7, **dadurch gekennzeichnet, dass** das Tau (44) aus einem Material ausgebildet ist, das Polymerfasern enthält.

9. Anschlussanordnung nach einem der Ansprüche 6 bis 8, **dadurch gekennzeichnet, dass** das Tau (44), zwischen dem einen abgebogenen Teil (40) und dem Verankerungspunkt (42), mit einem anderen abgebogenen Teil (40'; 40 ") eines anderen Kontaktabschnitts (26'; 26'') einer anderen flexiblen Rohrleitung (20'; 20'') verbunden ist.

10. Anschlussanordnung nach Anspruch 9, **dadurch gekennzeichnet, dass** der andere Kontaktabschnitt (26'; 26'') einen anderen ersten Teil (36'; 36'') und einen anderen zweiten Teil (38'; 38'') aufweist, die zu dem einen bzw. zweiten Teil (36, 38) im Wesentlichen parallel sind.

## Claims

1. An assembly for connection of at least one flexible pipe (20) to an undersea installation (18) laid on the bottom (10) of a marine environment, said flexible pipe being designed to extend between said undersea installation (18) and a surface installation (16) which emerges on the surface of said marine environment, said flexible pipe (20) having firstly a surface end (22) which is opposite a bottom end (28), and secondly a contact portion (26) which is situated close to said bottom end, and a floating portion (24) which extends between said contact portion (26) and said surface end (22), said surface end and said bottom end (28) being designed respectively to be connected to said surface installation (16) and said undersea installation (18), whereas said contact portion (26) comes into contact with said bottom (10) in the vicinity of said undersea installation (18), and said floating portion (24) extends between said bottom and said surface, said floating portion (24) being able to exert traction forces on said contact portion (26);
**characterized in that** said contact portion (26) comprises a curved part (40), said curved part dividing said contact portion (26) into a first part (36) which is oriented towards said bottom installation (18), and a second part (38) which links up with said floating portion (24);
and **in that** said curved portion (40) is anchored to said bottom (10) at an anchorage point (42) opposite both said bottom end (28) and said floating portion (24), such as to maintain said first and second parts (36, 38) substantially parallel to said base, and so as to absorb said traction forces exerted by said floating portion (24) on said contact portion (26).

2. The connection assembly as claimed in claim 1, **characterized in that** said curved part (40) has a lower surface opposite an upper surface (41), and **in that** said curved part is moored on said upper surface side (41).

3. The connection assembly as claimed in claim 1 or 2, **characterized in that** said curved part (41) is rigid.

4. The connection assembly as claimed in any one of claims 1 to 3, **characterized in that** said curved part (41) has two connection ends opposite one another, said two connection ends being connected respectively to said first and second parts (36, 38) of said contact portion (26), and **in that** each connection end is equipped with a stiffening sheath (46).

5. The connection assembly as claimed in any one of claims 1 to 4, **characterized in that** said contact portion (26) is equipped with heavy modules (32) in order to maintain said contact portion (26) on said bottom (10).

6. The connection assembly as claimed in any one of claims 1 to 5, **characterized in that** said curved part (40) is moored to said anchorage point (42) by mooring (44) which is oriented relative to said second part (38) of contact portion (26) and relative to said first part (36) of contact portion according to angles which are between 90° and 180°.

7. The connection assembly as claimed in claim 6, **characterized in that** said curved part (40) is moored to said anchorage point (42) by extensible mooring (44).

8. The connection assembly as claimed in claim 6 or 7, **characterized in that** said mooring (44) is made of a material comprising polymer fibers.

9. The connection assembly as claimed in any one of claims 6 to 8, **characterized in that** said mooring (44) is connected, between said one curved part (40) and said anchorage point (42), to another curved part (40' ; 40'') of another contact portion (26'; 26'') of another flexible pipe (20'; 20'').

10. The connection assembly as claimed in claim 9, **characterized in that** said other contact portion (26'; 26'') has another first part (36'; 36'') and another second part (38'; 38''), which are respectively substantially parallel to said first and second parts (36, 38).
